# EUROPEAN PATENT APPLICATION

(11) **EP 2 075 753 A1**
(43) Date of publication of application: **01.07.2009**
(21) Application number: 07829685.2
(22) Date of filing: 12.10.2007
(51) Int. Cl.: G06Q 30/00

(54) **DATA PROCESSING SYSTEM AND DATA PROCESSING METHOD**

(30) Priority: 18.10.2006 JP 2006284265
(71) Applicant: Sony Corporation, Tokyo 108-0075 (JP)
(72) Inventor: YAMADA, Yasuhiro, Minato-ku Tokyo 1080075 (JP)
(74) Representative: Thévenet, Jean-Bruno
(86) International application number: PCT/JP2007/069949
(87) International publication number: WO 2008/047706

(57) **Abstract**

The present invention generates coupon distribution key data in a key generation section (23) when distributing a coupon on advertising data; writes the coupon distribution key data to an IC card (50); manages memory identification data and the coupon distribution key data while associating them each other in a coupon management device (20); transmits the memory identification data and the coupon distribution key data stored in the IC card (50) from a user terminal device (30) to the coupon management device (20) when the user terminal device (30) has been operated to purchase a commodity; transmits coupon possession data to an electronic commerce site (40) if they coincide with the memory identification data and the coupon distribution key data managed in the coupon management device (20); makes a payment while allowing the coupon reflected therein. This allows the electronic commerce site, which published an advertisement, to authenticate that a user has obtained the coupon properly, which has been distributed to the user via an electronic advertisement that exists in an outdoor space or the like.

## Description

### Technical Field

The present invention relates to a data processing system and a data processing method which allow an electronic commerce site that has published an advertisement to authenticate that a user has obtained a coupon properly, when the coupon has been distributed to the user so as to be associated with memory identification data in a memory via an electronic advertisement that exists in an outdoor space or the like.
The present application claims priority from Japanese Patent Application No. 2006-284265, filed in the Japanese Patent Office on October 18, 2006, the entire contents of which are incorporated herein by reference.

### Background Art

As a means to induce a user to access an electronic commerce site by way of an advertising medium placed in a public space such as the outdoors, a method is in current use of causing the user to enter a specific character string, i.e., a coupon code, as a coupon. This method requires the user to perform an operation of entering the character string, and is not convenient. Moreover, the coupon code, which is visible information, is subject to character string duplication. In general, software that is used for a transaction at the electronic commerce site and a terminal where the user redeems the coupon is not produced or managed by an electronic coupon operating business entity, and therefore an open protocol is used therefor. At this time, some mechanism is required to prevent unlawful use of the coupon, to prevent a person who has obtained the coupon in an improper manner from behaving as if he or she possessed the coupon. Note that Japanese Patent Laid-open No. 2006-23864 is a document related to the present application.

### Disclosure of Invention

### Technical Problem

The present invention has been devised in view of the above problem, and aims to provide a data processing system and a data processing method which allow an electronic commerce site that has published an advertisement to authenticate that a user has obtained a coupon properly, when the coupon has been distributed to the user via an electronic advertisement that exists in an outdoor space or the like.
A data processing system according to the present invention includes: display means for displaying advertising data; key generation means for generating coupon distribution key data to be issued when a coupon published in the advertising data is distributed; first communication means for reading memory identification data stored in a memory, and writing the coupon distribution key data generated by the key generation means to the memory from which the memory identification data has been read, the first communication means being integrated with the display means or placed close to the display means; coupon management means for associating the coupon distribution key data generated by the key generation means with the memory identification data read by the first communication means and managing them; an electronic commerce site where a commodity advertised with the advertising data is available for purchase; a user terminal capable of accessing the electronic commerce site; and second communication means for reading the memory identification data and the coupon distribution key data stored in the memory, the second communication means being connected to the user terminal. When the user terminal has accessed the electronic commerce site and been operated to purchase the commodity, the user terminal transmits the memory identification data and the coupon distribution key data read by the second communication means to the coupon management means. The coupon management means compares the memory identification data and the coupon distribution key data managed therein with the memory identification data and the coupon distribution key data transmitted from the user terminal, and, if they coincide with each other, transmits the coupon possession data to the electronic commerce site to allow the electronic commerce site to perform a payment process while allowing the coupon to be reflected therein.
A data processing method according to the present invention includes the steps of: displaying advertising data on display means; generating coupon distribution key data with key generation means, when distributing a coupon published in the advertising data; with first communication means, reading memory identification data stored in a memory, and writing the coupon distribution key data generated by the key generation means to the memory from which the memory identification data has been read; associating the memory identification data read by the first communication means with the coupon distribution key data generated by the key generation means and managing them in coupon management means; reading the memory identification data and the coupon distribution key data stored in the memory, with second communication means connected to the user terminal capable of accessing an electronic commerce site; with the user terminal, transmitting the memory identification data and the coupon distribution key data read by the second communication means to the coupon management means, when the user terminal accessing the electronic commerce site has been operated to purchase a commodity; with the coupon management means, comparing the memory identification data and the coupon distribution key data managed therein with the memory identification data and the coupon distribution key data transmitted from the user terminal; and if the memory identification data and the coupon distribution key data managed therein coincide with the memory identification data and the coupon distribution key data transmitted from the user terminal, transmitting the coupon possession data to the electronic commerce site to allow the electronic commerce site to perform a payment process while allowing the coupon to be reflected therein.
According to the present invention as described above, when the user terminal accessing the electronic commerce site has been operated to purchase the commodity, the user terminal transmits the memory identification data and the coupon distribution key data read via the second communication means to the coupon management means; the coupon management means compares the memory identification data and the coupon distribution key data managed therein with the memory identification data and the coupon distribution key data transmitted from the user terminal; and if they coincide with each other, the coupon management means transmits the coupon possession data to the electronic commerce site so that the electronic commerce site can perform the payment process while allowing the coupon to be reflected therein. Accordingly, the coupon distribution key data does never appear as visible information for a user, and this contributes to preventing the coupon distribution key data from being copied into another memory illicitly. Moreover, because, at the time of use of the coupon, the coupon management means compares the memory identification data and the coupon distribution key data managed therein with the memory identification data and the coupon distribution key data transmitted from the user terminal, use of an unauthorized coupon can be prevented.

### Brief Description of Drawings

[FIG. 1] FIG. 1 is a diagram illustrating the structure of a data processing system to which the present invention was applied.
[FIG. 2] FIG. 2 is a block diagram of an advertisement display device that forms the data processing system.
[FIG. 3] FIG. 3 is a block diagram of a coupon management device that forms the data processing system.
[FIG. 4] FIG. 4 is a block diagram of a user terminal device that forms the data processing system.
[FIG. 5] FIG. 5 is a block diagram of an electronic commerce site that forms the data processing system.
[FIG. 6] FIG. 6 is a flowchart illustrating a series of processes performed before obtainment of a coupon.
[FIG. 7] FIG. 7 is a flowchart illustrating a series of processes performed when a plurality of coupons are obtained.
[FIG. 8] FIG. 8 is a flowchart illustrating a series of processes performed when the coupon is used at the time of purchasing a commodity.
[FIG. 9] FIG. 9 is a flowchart illustrating a series of processes performed when a content of the coupon obtained by a user is checked.
[FIG. 10] FIG. 10 is a block diagram of an advertisement display device equipped with a key generation section, in a variation of the present invention.
[FIG. 11] FIG. 11 is a flowchart illustrating a series of processes performed in the case where coupon distribution key data is generated in the advertisement display device.

### Best Mode for Carrying Out the Invention

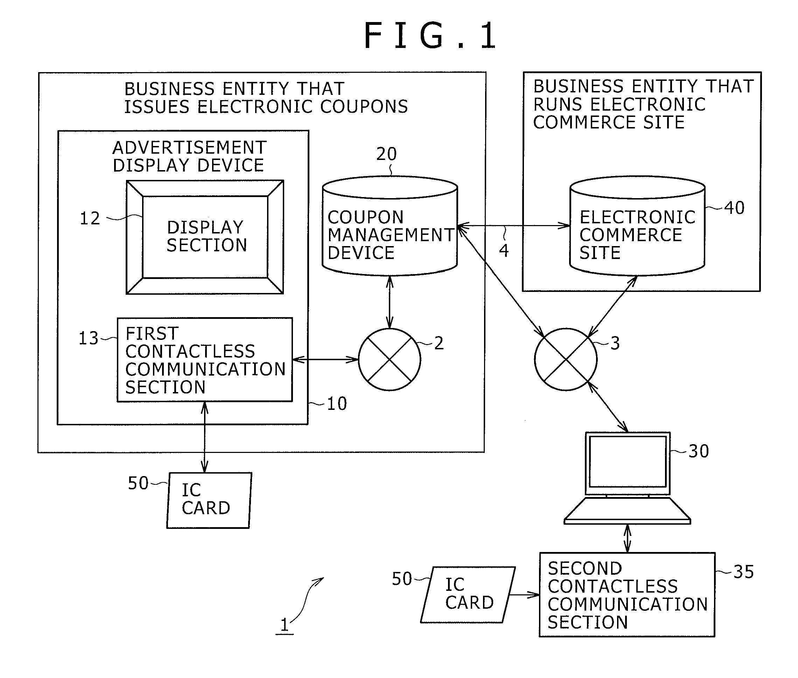

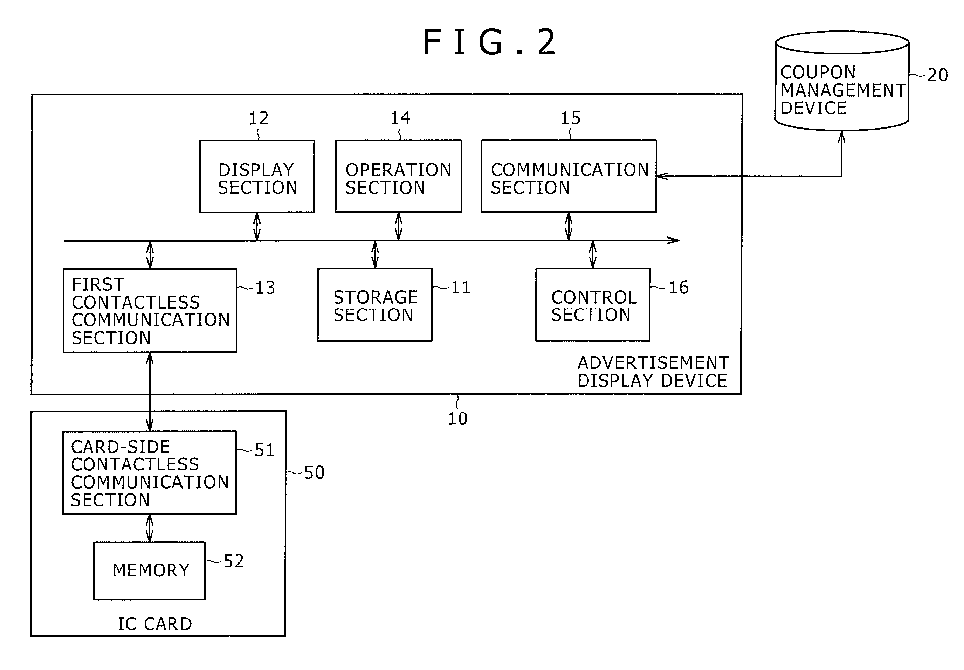

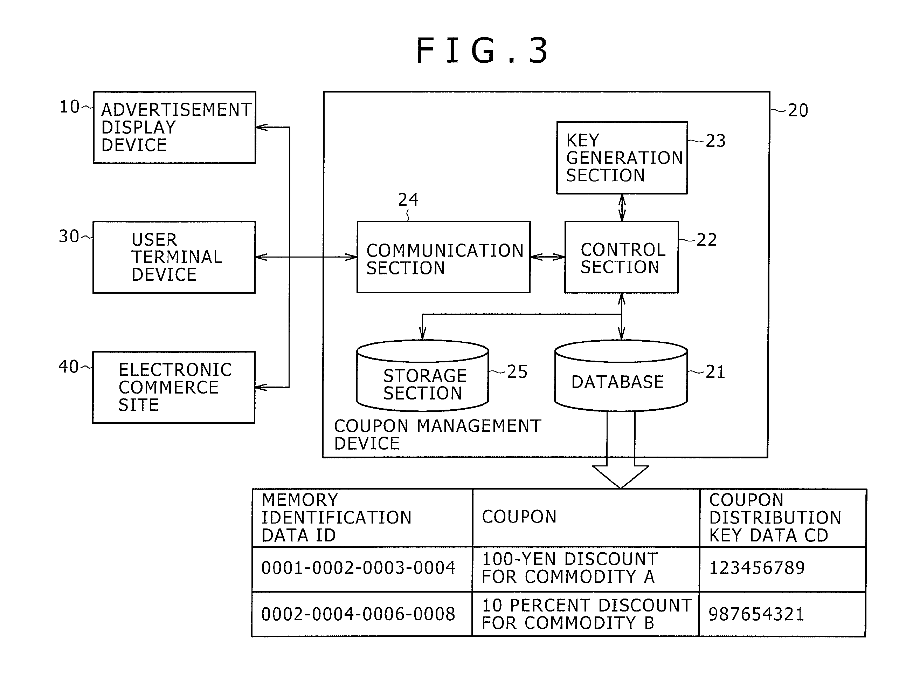

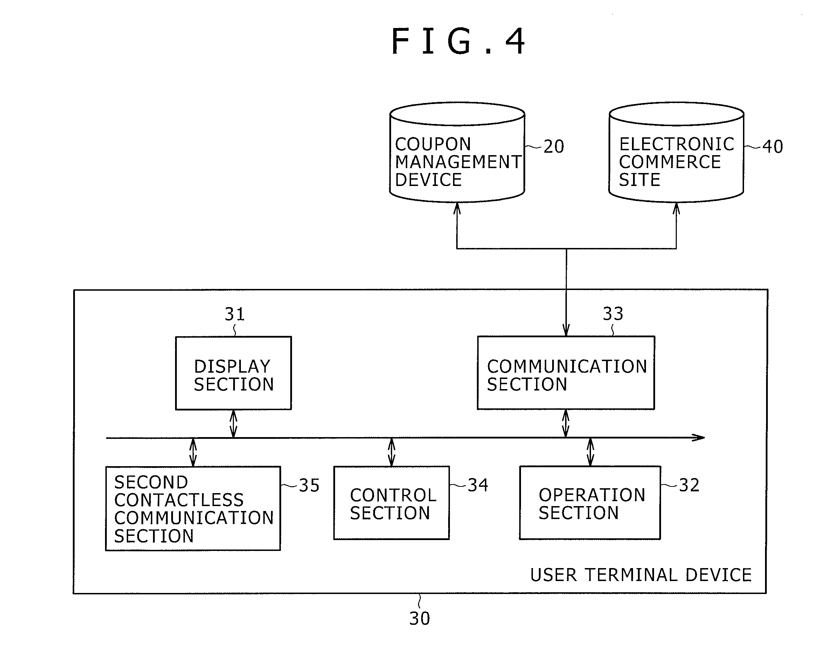

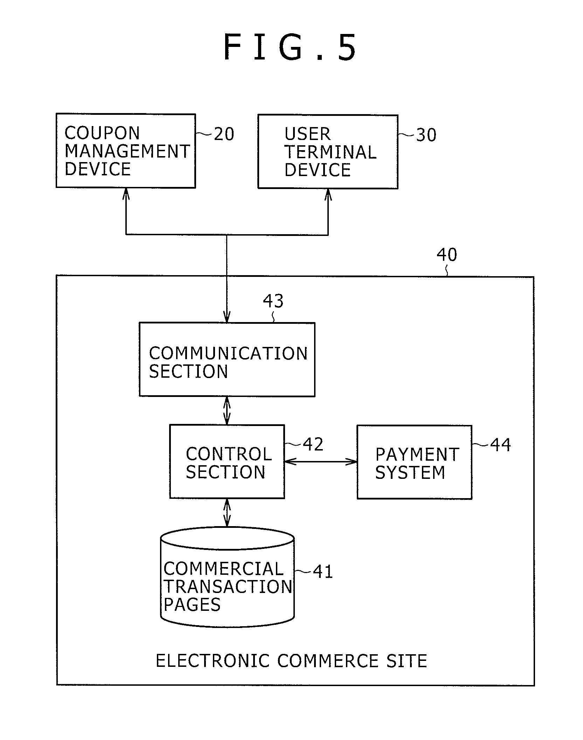

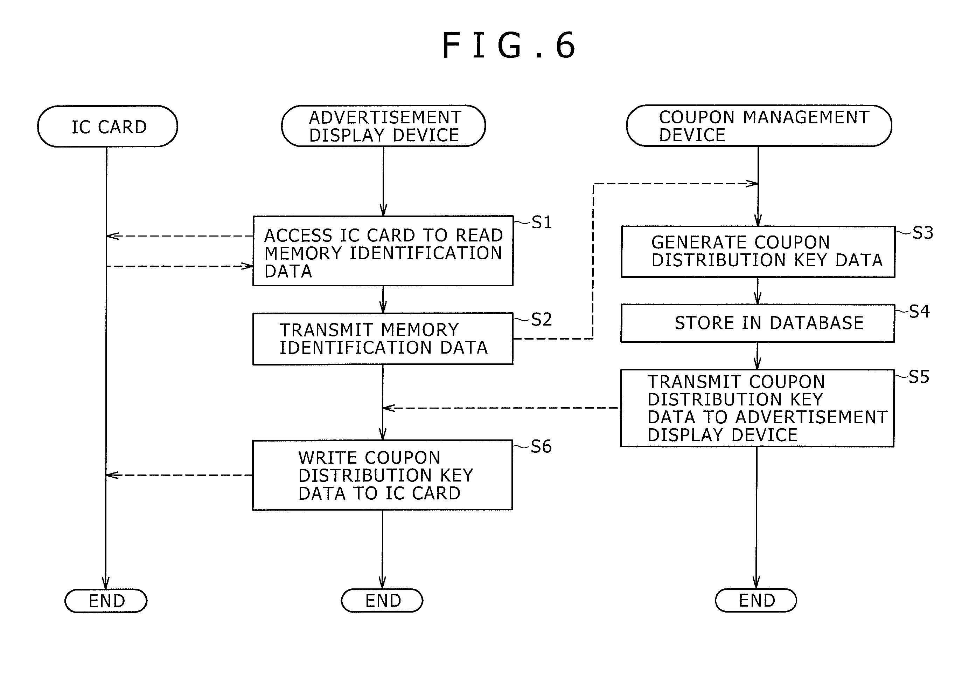

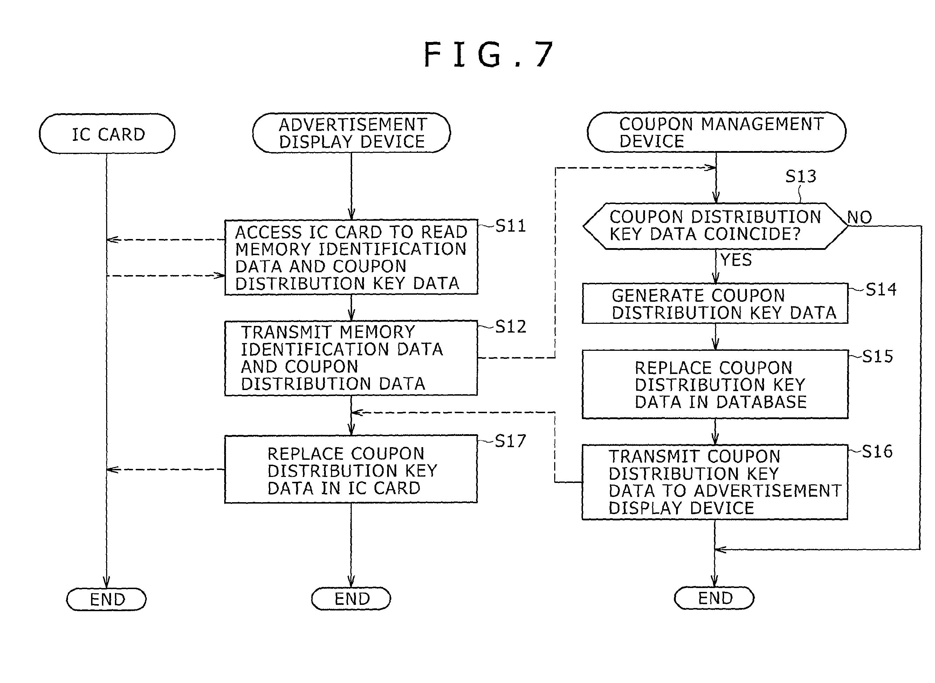

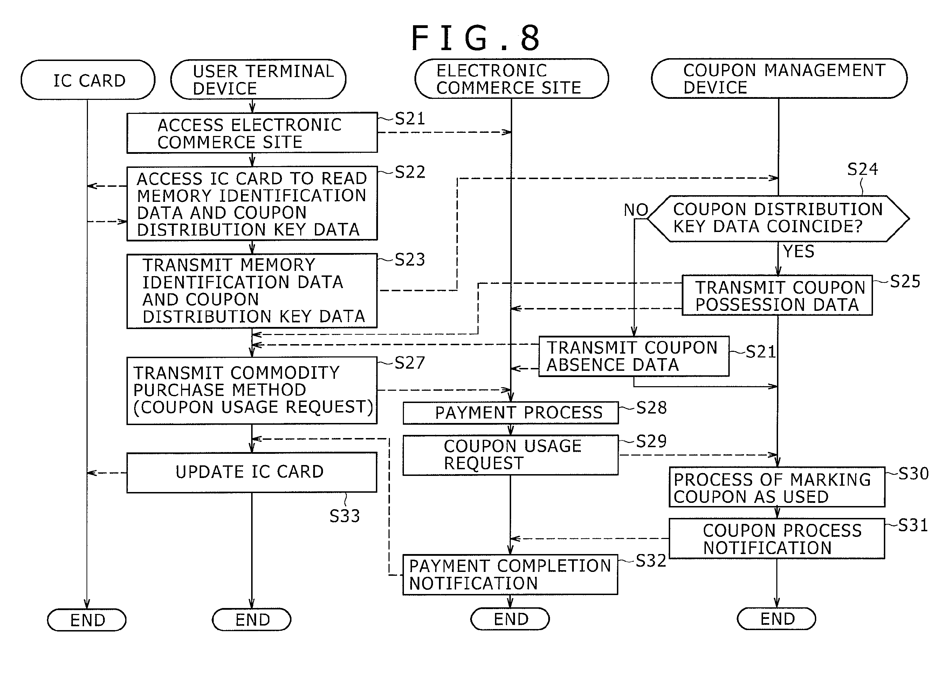

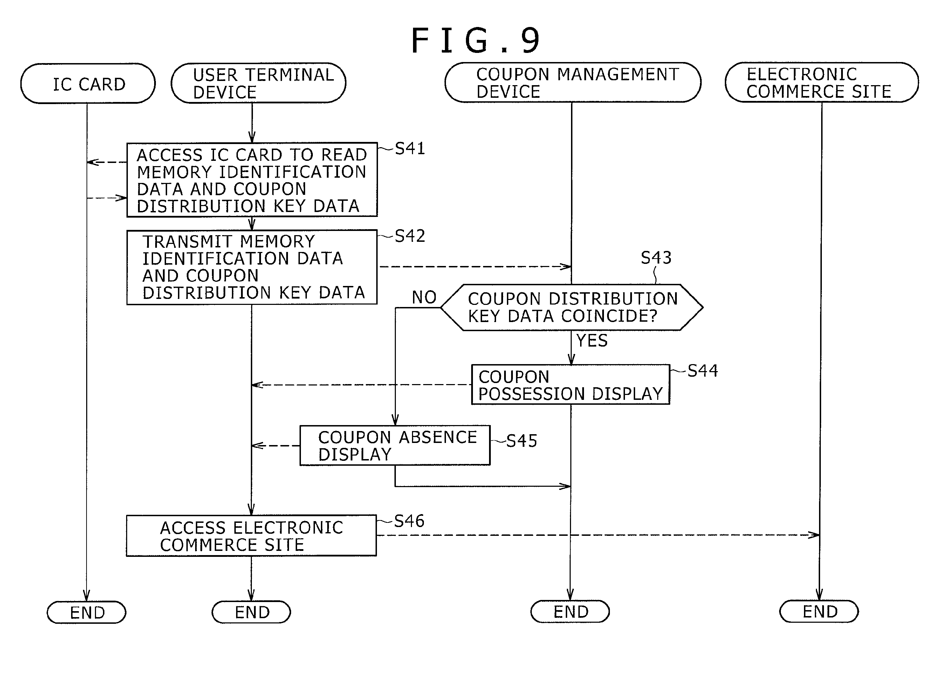

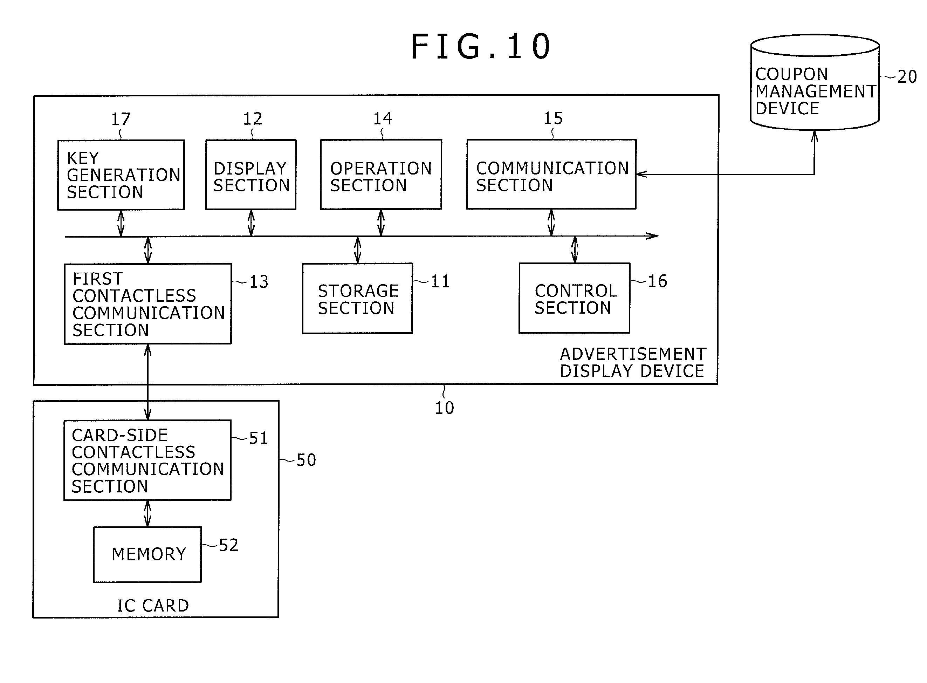

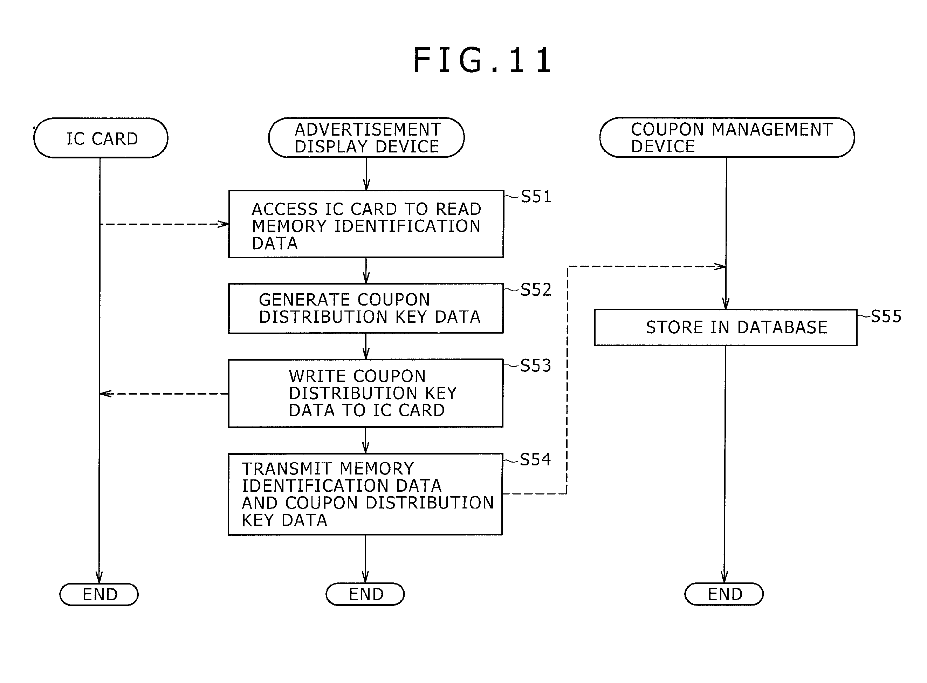

Hereinafter, a data processing system to which the present invention was applied will be described with reference to the accompanying drawings.
As illustrated in FIG. 1, a data processing system 1 to which the present invention was applied includes: an advertisement display device 10, which is installed at a public place, such as the outdoors, where an unspecified large number of people gather, and which displays videos or still images of advertisements for a plurality of stores or commodities; a coupon management device 20, which manages coupons of stores that publish advertising data that is to be played by the advertisement display device 10; a user terminal device 30, which is used by a user when using a discount coupon, for example; and an electronic commerce site 40, which is accessed by the user terminal device 30. The user carries an IC card 50 charged with money data, for example, and puts the IC card 50 over a first contactless communication section 13, which is integrated with or placed close to the advertisement display device 10, to obtain a coupon. Then, the user uses the user terminal device 30 to access the electronic commerce site 40, and, when purchasing a desired commodity, puts the IC card 50, with which the user has obtained the coupon, over a second contactless communication section 35, which is integrated with or connected to the user terminal device 30, to use the coupon and further to make a payment.
The coupons issued to users are managed by the coupon management device 20 so that use of only legitimate coupons may be permitted. Specifically, the coupon management device 20 issues coupon distribution key data when issuing the coupon to the user, and, at the time of payment, compares it with coupon distribution key data transmitted from the user terminal device 30 to determine whether the coupon which the user is about to use is legitimate or not.
The advertisement display device 10 and the coupon management device 20 are connected to each other via a network 2 such as a WAN (Wide Area Network) or a LAN (Local Area Network), for example, whereas the coupon management device 20 and the user terminal device 30, and the user terminal device 30 and the electronic commerce site 40, are connected to each other via a similar network 3. Note that the coupon management device 20 and the electronic commerce site 40 are connected to each other via a dedicated line 4 in this embodiment, although they may be connected via a network such as the network 2 or 3.
First, the advertisement display device 10 will now be described below with reference to FIGS. 1 and 2. The advertisement display device 10 is managed by a business entity that issues electronic coupons, and configured to carry out push-type or pull-type advertisement by use of a large-screen display section. Specifically, the advertisement display device 10 includes: a storage section 11 for storing a plurality of pieces of advertising data to be played; a display section 12 for playing the pieces of advertising data stored in the storage section 11 sequentially; the first contactless communication section 13 for performing communication with the IC card 50; an operation section 14 used for an operation of obtaining the coupon, for example; a communication section 15 for performing communication with the coupon management device 20 via the network 2; and a control section 16 for controlling an overall operation.
The storage section 11 is formed by a large-capacity hard disk, for example, and stores the plurality of pieces of advertising data. The pieces of advertising data stored therein correspond to advertisements for commodities, such as drinking water or confectionaries, for example. The pieces of advertising data include an indication that a coupon is available that can be used when purchasing a commodity being advertised.
The display section 12 is equipped with a large screen, and formed by an LCD (Liquid Crystal Display), a CRT (Cathode Ray Tube), or the like. Note that the display section 12 may be formed by a touch panel and integrated with the operation section 14. The operation section 14 has a push button, a cross key, and so on, and allows an operation of obtaining the coupon at the sight of predetermined advertising data displayed on the display section 12, for example.
The first contactless communication section 13 communicates with the IC card 50 via short-range or near-field contactless wireless communication, such as RFID (Radio Frequency Identification System) or NFC (Near Field Communication).
Here, as illustrated in FIG. 2, the IC card 50 includes a card-side contactless communication section 51 for performing communication with the first contactless communication section 13, and a memory 52 for storing various types of information. The IC card 50 has management data, such as a card identification data ID unique to the IC card 50, stored in the memory 52, and allows the management data to be exchanged with the first contactless communication section 13 via the card-side contactless communication section 51. Specifically, each of the first contactless communication section 13 on the part of the advertisement display device 10 and the card-side contactless communication section 51 on the part of the IC card 50 has an antenna coil, and the antenna coils are magnetically coupled with each other via inductive coupling, so that the IC card and the reader/writer perform contactless data communication therebetween. When the IC card 50 is put over the first contactless communication section 13, the first contactless communication section 13 communicates with the IC card 50 to acquire the memory identification data ID of the IC card 50 stored in the memory 52 of the IC card 50. In addition, the first contactless communication section 13 causes the coupon distribution key data to be stored in the memory 52 of the IC card 50.
The communication section 15 exchanges data with the coupon management device 20 via the network 2. Specifically, the communication section 15 transmits to the coupon management device 20 the memory identification data ID of the IC card 50, which has been read via the first contactless communication section 13, and receives the coupon distribution key data transmitted from the coupon management device 20.
As illustrated in FIG. 3, the coupon management device 20, which manages the coupons to be issued to the users, includes: a database 21, which is constructed in storage means such as a large-capacity hard disk; a control section 22 for controlling an overall operation and for accessing and searching the database 21; a key generation section 23 for generating coupon distribution key data CD for authentication purposes when issuing the coupon to the user; a communication section 24 for performing communication with the advertisement display device 10, the user terminal device 30, and the electronic commerce site 40; and a storage section 25, which stores various types of web pages for checking the issued coupons.
The database 21 manages the memory identification data ID, which is assigned to each IC card 50, the coupon, i.e., a content of the coupon, and the coupon distribution key data CD, which is generated for the coupon issued to the user, such that they are associated with one another. For example, a 100-yen discount coupon for commodity A and coupon distribution key data CD "123456789" are associated with a memory identification data ID "0001-0002-0003-0004."
The key generation section 23 generates the coupon distribution key data CD according to a specified rule or at random. The coupon distribution key data CD is caused to be stored in the database 21 and the memory 52 of the IC card 50.
Specifically, if the user, who is viewing the advertising data, puts his or her IC card 50 over the first contactless communication section 13 of the advertisement display device 10 in order to obtain the coupon, identification data of the desired coupon and the memory identification data ID stored in the memory 52 of the IC card 50 being used are transmitted to the communication section 24 of the coupon management device 20 via the network 2. Then, the control section 22 associates the received memory identification data ID with the identification data of the coupon, i.e., the content of the coupon, and stores them in the database 21. At the same time, the key generation section 23 generates the coupon distribution key data CD, and the control section 22 associates the generated coupon distribution key data CD with the memory identification data ID, and stores them in the database 21. In addition, the control section 22 transmits the generated coupon distribution key data CD to the advertisement display device 10 via the communication section 24, allowing it to be stored in the memory 52 of the IC card 50 being put over the first contactless communication section 13.
Note that, when allowing the coupon distribution key data CD to be stored in the IC card 50 being put over the first contactless communication section 13 of the advertisement display device 10, the coupon management device 20 may additionally allow address data, such as a URL (Uniform Resource Locator) of the electronic commerce site 40 where the coupon obtained can be used, to be stored in the IC card 50. This will save the user the trouble of entering the URL when accessing the electronic commerce site 40 with the user terminal device 30.
If the memory identification data ID and the coupon distribution key data CD are transmitted from the user terminal device 30 when the user attempts to purchase the commodity while using the coupon obtained, the coupon management device 20 receives them via the communication section 24. The control section 34 accesses the database 21 to determine whether the memory identification data ID transmitted from the user terminal device 30 exists therein, and, if the memory identification data ID exists therein, compares the coupon distribution key data CD transmitted from the user terminal device 30 with the coupon distribution key data CD associated with the memory identification data ID in the database 21 to determine whether they coincide with each other. Then, if they coincide with each other, the control section 22, judging that the coupon distribution key data CD transmitted from the user terminal device 30 is legitimate and not an unlawful duplication, transmits coupon possession data, which serves as approval data, to the electronic commerce site 40 and the user terminal device 30.
Also, when the user has accessed the coupon management device 20 with the user terminal device 30 in order to check the number and contents of coupons possessed by the user, the control section 34 accesses the database 21 to determine whether the coupon distribution key data CD associated with the memory identification data ID transmitted from the user terminal device 30 coincides, and, if it coincides, transmits a page showing a list of the contents and the like of the coupons possessed by the user from the storage section 25 to the user terminal device 30. Note that this report to the user terminal device 30 may be accomplished by using an electronic mail instead of the web page.
If the coupon distribution key data CD is stored in the IC card 50, the user accesses the electronic commerce site 40 using the user terminal device 30 when using the coupon. Here, the user terminal device 30 is a common desktop or notebook personal computer, a portable information processing device, or the like. As illustrated in FIG. 4, the user terminal device 30 includes: a display section 31, such as an LCD or a CRT; an operation section 32, such as a keyboard, a mouse, a numeric keypad, or the like; a communication section 33 for exchanging data with the coupon management device 20 or the electronic commerce site 40 via the network 3; and a control section 34 for controlling an overall operation. In addition, the user terminal device 30 includes the second contactless communication section 35 for performing communication with the IC card 50.
By entering a predetermined URL or the like, the user of the user terminal device 30 is able to access the electronic commerce site 40 or the like via the network 3 to view a home page. Specifically, when using the coupon obtained via the advertisement display device 10, the user is able to access the electronic commerce site 40 via the network 3 to view a web page for a commodity related to the coupon obtained.
The second contactless communication section 35 has a structure similar to that of the above-described first contactless communication section 13 of the advertisement display device 10, and is contained in or externally connected to the user terminal device 30. If the user puts the IC card 50 over the second contactless communication section 35 in order to use the coupon when attempting to purchase a commodity via the home page which the user is viewing via the user terminal device 30, the second contactless communication section 35 reads the memory identification data ID and the coupon distribution key data CD from the memory 52 of the IC card 50. Then, for approval of the coupon distribution key data CD stored in the IC card 50, the control section 34 transmits the memory identification data ID and the coupon distribution key data CD read via the second contactless communication section 35 to the coupon management device 20 via the communication section 33 and the network 3. Then, the user terminal device 30 displays an approval result on the display section 31, thereby notifying the user of the result.
Note that it may be so arranged that, in the case where a URL for a commodity for which the coupon is targeted is stored in the memory 52 of the IC card 50 in addition to the coupon distribution key data CD, the user is able to access a web page for the commodity for which the coupon is targeted on the electronic commerce site 40, by first putting the IC card 50 over the second contactless communication section 35 to allow the URL to be read from the memory 52, without the need to enter the URL via the operation section 32.
The electronic commerce site 40, which is accessed by the user terminal device 30, is a common server device, for example. As illustrated in FIG. 5, the electronic commerce site 40 includes: a storage section 41, which is formed by a large-capacity hard disk or the like that stores electronic commerce pages, composed of web pages for purchasing commodities, a web page for payment, and so on; a control section 42, which reads a specified web page from the storage section 41 in response to a request from the user terminal device 30, and transmits it to the user terminal device 30; and a communication section 43 for performing communication with the coupon management device 20 or the user terminal device 30 via the network 3. In addition, the electronic commerce site 40 includes a payment system 44 used when the user purchases a commodity. Note that the payment system 44 may be installed on a site separate from the electronic commerce site 40.
The electronic commerce site 40 forms a virtual shopping mall, for example, and is managed by a business entity that runs the electronic commerce site, where a virtual store can be set up to sell a plurality of commodities. Here, an owner of the virtual store is an advertiser for the advertising data played by the advertisement display device 10. The electronic commerce site 40 transmits a web page for a specified commodity in response to a request from the user terminal device 30.
Further, upon receipt by the communication section 43 of a command to purchase the commodity for which the coupon is targeted, the control section 42 accesses the payment system 44 to perform a payment process. Specifically, in the case where the approval data for the coupon distribution key data CD transmitted from the user terminal device 30 to the coupon management device 20 has been received via the communication section 43, the control section 42, at the time of the purchase of the commodity, performs the payment process for the user while applying the discount coupon to a list price thereof. Meanwhile, in the case where the coupon distribution key data CD has not been approved, the control section 42 performs the payment process with the list price. That is, in the case of debit card payment, the payment system 44 accesses a bank system to perform the payment process, whereas in the case of credit card payment, the payment system 44 accesses a credit card company system to perform the payment process. Still further, in the case where the payment is to be made with money with which the IC card 50 is charged, the payment system 44 performs a process of reducing the sum of the money data in the IC card 50 by the amount of money to be paid, and transmits payment data to a management system for the IC card 50.
Next, with reference to FIG. 6, a series of processes will now be described below that is performed in the data processing system 1 with the above-described structure until the user obtains the coupon by operating the advertisement display device 10 such that the coupon will be stored in his or her IC card 50.
If the user watches the advertising data played by the advertisement display device 10, finds a piece of advertising data that he or she likes, and attempts to obtain the coupon, the user first operates the operation section 14 of the advertisement display device 10 to cause a coupon acquisition screen to be displayed on the display section 12, so that the user is prompted to put the IC card 50 over the first contactless communication section 13. If the user puts the IC card 50 over the first contactless communication section 13, the first contactless communication section 13, at step S1, accesses a predetermined block in the memory 52 of the IC card 50 to read the identification data unique to the IC card 50, i.e., the memory identification data ID. At step S2, the control section 16 of the advertisement display device 10 transmits the memory identification data ID read from the IC card 50 to the coupon management device 20 via the communication section 15 and the network 2. Note that the advertisement display device 10 may transmit identification data for the user-desired coupon, together with the memory identification data ID, to the coupon management device 20.
Upon receipt by the communication section 24 of the memory identification data ID transmitted from the advertisement display device 10 via the network 2, the control section 22 of the coupon management device 20 controls the key generation section 23 to generate the coupon distribution key data CD to be associated with the received memory identification data ID, at step S3. Next, at step S4, the control section 22 associates the memory identification data ID received via the communication section 24 with the coupon distribution key data CD generated by the key generation section 23, and stores them in the database 21. Here, the control section 22 further associates the content of the coupon and, for example, the identification data for the coupon specifically associated with the content of the coupon with them, and stores them in the database. Then, at step S5, the control section 22 transmits the coupon distribution key data CD generated by the key generation section 23 to the advertisement display device 10 via the communication section 24 and the network 2.
Upon receipt by the communication section 15 of the coupon distribution key data CD transmitted from the coupon management device 20, the control section 16 of the advertisement display device 10 writes it to the IC card 50 being put over the first contactless communication section 13, at step S6. Specifically, the control section 16 causes the coupon distribution key data CD to be stored in a predetermined block in the IC card 50 via the first contactless communication section 13.
As a result, the user obtains the coupon for the desired commodity. According to the above-described method of obtaining the coupon with the use of the IC card 50, the coupon distribution key data CD always exists as electronic data, and is never visible to the user. This contributes to preventing a third party, who is different from the authorized possessor and who has obtained the coupon in an improper manner, from using the coupon.
There are cases where the user who has obtained a coupon desires to obtain an additional coupon before using it. Specifically, there are cases where the user obtains a plurality of coupons. In this case, the data processing system 1 performs a process as illustrated in FIG. 7.
Specifically, if the user puts the IC card 50 over the first contactless communication section 13, the first contactless communication section 13 accesses the predetermined block in the memory 52 of the IC card 50 to read the memory identification data ID and the coupon distribution key data CD, at step S11. At step S12, the control section 16 of the advertisement display device 10 transmits the memory identification data ID and the coupon distribution key data CD read from the IC card 50 to the coupon management device 20 via the communication section 15 and the network 2.
Upon receipt by the communication section 24 of the memory identification data ID and the coupon distribution key data CD transmitted from the advertisement display device 10 via the network 2, the control section 22 of the coupon management device 20 accesses the database 21 to search for the memory identification data ID that coincides with the received memory identification data ID, and determines whether the retrieved coupon distribution key data CD coincides with the received coupon distribution key data CD, at step S13. If these coupon distribution key data CD coincide, the control section 22 proceeds to step S13, whereas if they do not coincide, the control section 22 logs out. If these coupon distribution key data CD coincide, the control section 22 controls the key generation section 23 to generate a new piece of coupon distribution key data CD to be associated with the memory identification data ID, at step S14. Then, at step S15, the control section 22 replaces the coupon distribution key data CD associated with the received memory identification data ID in the database 21 with the newly generated coupon distribution key data CD. At this time, the control section 22 associates the coupon desired by the user this time with the memory identification data ID. That is, when a plurality of coupons are issued, the plurality of coupons are associated with the pair of the memory identification data ID and the coupon distribution key data CD associated with each other in the database 21. At step S16, the control section 22 transmits the coupon distribution key data CD newly generated by the key generation section 23 to the advertisement display device 10 via the communication section 24 and the network 2.
Upon receipt by the communication section 15 of the coupon distribution key data CD transmitted from the coupon management device 20, the control section 16 of the advertisement display device 10 writes the received coupon distribution key data CD to the IC card 50 being put over the first contactless communication section 13, at step S17. Specifically, the control section 16 replaces the coupon distribution key data CD currently stored in the predetermined block in the IC card 50 with the newly issued coupon distribution key data CD, via the first contactless communication section 13.
As a result, the user finishes obtaining the plurality of coupons. Notice here that, at step S13, the coupon management device 20 compares the coupon distribution key data CD associated with the memory identification data ID managed by the database 21, which has already been issued to the IC card 50 of the user's, to determine whether they coincide with each other, before the use of the coupon, i.e., before the purchase of the commodity. This contributes to preventing an immoral person from using the coupon illicitly, for example, by copying the coupon distribution key data CD into the IC card 50 of his or her own.
Next, with reference to FIG. 8, a series of processes will now be described below in which the user who has obtained the coupon in the above-described manner purchases his or her desired commodity via the electronic commerce site 40 while using the coupon.
First, the user uses the user terminal device 30 installed in his or her home or the like to access the electronic commerce site 40. Specifically, if the predetermined URL is entered with the operation section 32, the control section 34 of the user terminal device 30 accesses the electronic commerce site 40 via the communication section 33 and the network 3, and displays the electronic commerce pages composed of a plurality of web pages for purchasing desired commodities on the display section 31, at step S21. Note that, in the case where the URL of the electronic commerce site 40 is stored in the IC card 50, the URL may be read therefrom via the second contactless communication section 35 for the user terminal device 30 to access the electronic commerce site 40.
If the user puts the IC card 50 over the second contactless communication section 35 in order to use the obtained coupon, the second contactless communication section 35 accesses the predetermined block in the memory 52 of the IC card 50 to read the memory identification data ID and the coupon distribution key data CD, at step S22. At step S23, the control section 34 of the user terminal device 30 transmits the memory identification data ID and the coupon distribution key data CD read by the second contactless communication section 35 to the coupon management device 20 via the communication section 33 and the network 3.
Upon receipt by the communication section 24 of the memory identification data ID and the coupon distribution key data CD transmitted from the user terminal device 30 via the network 3, the control section 22 of the coupon management device 20 accesses the database 21 to search for the memory identification data ID that coincides with the received memory identification data ID, and determines whether the retrieved coupon distribution key data CD coincides with the coupon distribution key data CD transmitted from the user terminal device 30, at step S24. Then, if these coupon distribution key data CD coincide with each other, the control section 22 transmits, to the electronic commerce site 40 and the user terminal device 30 via the network 3, the coupon possession data, which indicates that the user who has operated the user terminal device 30 possesses the coupon, at step S25, whereas if these coupon distribution key data CD do not coincide with each other, the control section 22 transmits, to the electronic commerce site 40 and the user terminal device 30 via the network 3, coupon absence data that indicates that the user who has operated the user terminal device 30 does not possess the coupon, at step S26. As a result, the user can know whether he or she possesses any coupon at present.
Even during or after a check as to whether the user possesses any coupon is carried out, the user is able to access the electronic commerce site 40 using the user terminal device 30, and find a desired commodity by performing a search or the like. Then, if, when purchasing the desired commodity, the user uses the operation section 32 to enter payment data, such as information about which of the credit card payment, the debit card payment, and the payment using the IC card 50 is to be performed, and a coupon usage request for the use of the coupon, the control section 34 of the user terminal device 30 transmits the payment data to the electronic commerce site 40 via the communication section 33 and the network 3, at step S27. Upon receipt by the communication section 43 of the payment data, the electronic commerce site 40 performs the payment process with the payment system 44, at step S28. During this payment process, the control section 42 of the electronic commerce site 40 transmits the coupon usage request contained in the payment data to the coupon management device 20, at step S29.
Upon receipt by the communication section 24 of the coupon usage request, the control section 22 of the coupon management device 20 updates the database 21 such that the coupon used by the user is marked as used, at step S30. Then, at step S31, the control section 22 transmits, to the electronic commerce site 40 via the communication section 24, a coupon process notification for notifying the user and the electronic commerce site 40 that the coupon used by the user has been marked as used.
Here, the payment system 44 in the electronic commerce site 40 generates charging data for the user while applying the coupon, transmits the generated charging data to a credit card system, the bank system, or the like, and finishes the payment process. Then, at step S32, the control section 42 of the electronic commerce site 40 transmits a payment completion notification to the user terminal device 30 via the communication section 43 and the network 3.
Upon receipt by the communication section 33 of the payment completion notification, the control section 34 of the user terminal device 30 displays it on the display section 31, thereby notifying the user thereof. Then, at step S33, the control section 34 performs an update process, such as deleting the coupon distribution key data CD from the IC card 50 via the second contactless communication section 35.
According to the above-described process, the coupon distribution key data CD always exists as electronic data, and is never visible to the user, from the acquisition of the coupon by the user until the use of the coupon. This contributes to preventing a third party, who is different from the authorized possessor and who has obtained the coupon in an improper manner, from using the coupon. Moreover, at step S24, the coupon management device 20 checks whether or not the coupon distribution key data CD associated with the memory identification data ID managed by the database 21 coincides, at the time of the use of the coupon, i.e., at the time of the purchase of the commodity. This contributes to preventing an immoral person from using the coupon illicitly, for example, by copying the coupon distribution key data CD into the IC card 50 of his or her own.
There are cases where the user desires to check the number and contents of coupons possessed by the user, before or when purchasing his or her desired commodity while using the coupon in the above-described manner. In such a case, the user is able to check his or her coupons, according to a series of processes as illustrated in FIG. 9.
First, the user uses the user terminal device 30 installed in his or her home or the like to access the coupon management device 20. Specifically, if the user puts the IC card 50 over the second contactless communication section 35, the second contactless communication section 35 accesses the predetermined block in the memory 52 of the IC card 50 to read the memory identification data ID and the coupon distribution key data CD, at step S41. At step S42, the control section 34 of the user terminal device 30 transmits the memory identification data ID and the coupon distribution key data CD read by the second contactless communication section 35 to the coupon management device 20 via the communication section 33 and the network 3.
Upon receipt by the communication section 24 of the memory identification data ID and the coupon distribution key data CD transmitted from the user terminal device 30 via the network 2, the control section 22 of the coupon management device 20 accesses the database 21 to search for the memory identification data ID that coincides with the received memory identification data ID, and determines whether the retrieved coupon distribution key data CD coincides with the coupon distribution key data CD transmitted from the user terminal device 30, at step S43. If these coupon distribution key data CD coincide with each other, the control section 22 transmits, to the user terminal device 30, a web page that shows the number and contents of coupons possessed by the user who has operated the user terminal device 30, at step S44, so that the user can check the contents with the display section 31 of the user terminal device 30. Meanwhile, if these coupon distribution key data CD do not coincide with each other, the control section 22 transmits, to the user terminal device 30, a web page that indicates that the user who has operated the user terminal device 30 does not have any coupon, at step S45, so that the user can check the contents with the display section 31 of the user terminal device 30. The web pages displayed by the user terminal device 30 at step S44 and step S45 contain a hyperlink or the like for guiding the user to the electronic commerce site 40.
Then, if the user uses the operation section 32 to enter the predetermined URL or click on the hyperlink provided on the web page for checking the coupons, the control section 34 of the user terminal device 30 accesses the electronic commerce site 40 via the communication section 33 and the network 3, and displays the electronic commerce pages composed of the plurality of web pages for purchasing the desired commodities on the display section 31, at step S46.
The above-described process allows the user to check the contents of his or her coupons and immediately thereafter access the electronic commerce site 40 easily.
In the case of the above-described data processing system 1, as illustrated in FIG. 3 and FIG. 6, the key generation section 23 is provided on the coupon management device 20, the coupon distribution key data CD generated by the key generation section 23 is transmitted to the advertisement display device 10, and the first contactless communication section 13 is used to store the coupon distribution key data CD in the memory 52 of the IC card 50. However, it is possible in the present invention that, as illustrated in FIG. 10, the coupon management device 20 be not provided with the key generation section 23, and that a key generation section 17, which is a substitute for the key generation section 23, be provided on the advertisement display device 10.
In this case, referring to FIG. 11, if the user watches the advertising data played by the advertisement display device 10, finds a piece of advertising data that he or she likes, and attempts to obtain the coupon, the user first operates the operation section 14 of the advertisement display device 10 to cause the coupon acquisition screen to be displayed on the display section 12, so that the user is prompted to put the IC card 50 over the first contactless communication section 13. If the user puts the IC card 50 over the first contactless communication section 13, the first contactless communication section 13, at step S51, accesses the predetermined block in the memory 52 of the IC card 50 to read the identification data unique to the IC card 50, i.e., the memory identification data ID. At step S52, the key generation section 17 of the advertisement display device 10 generates the coupon distribution key data CD to be associated with the memory identification data ID at the key generation section 23. At step S53, the advertisement display device 10 causes the coupon distribution key data CD generated by the key generation section 17 to be stored in the memory 52 of the IC card 50 via the first contactless communication section 13. At step S54, the advertisement display device 10 transmits the memory identification data ID read from the IC card 50 and the generated coupon distribution key data CD to the coupon management device 20 via the communication section 15 and the network 2.
Upon receipt by the communication section 24 of the memory identification data ID and the coupon distribution key data CD transmitted from the advertisement display device 10 via the network 2, the control section 22 of the coupon management device 20 associates the memory identification data ID received by the communication section 24 with the coupon distribution key data CD, and stores them in the database 21, at step S55, so that the coupon issued will be managed therein.
In the case where the user obtains a plurality of coupons as illustrated in FIG. 7, it may be so arranged that the coupon management device 20 checks the coupon distribution key data CD, that thereafter the key generation section 17 of the advertisement display device 10 generates a new piece of coupon distribution key data CD, and that the newly generated coupon distribution key data CD is transmitted to the coupon management device 20 to achieve the update of the database 21. After the storage of the coupon distribution key data CD into the IC card 50, processes will be performed according to the processes of FIG. 8 or FIG. 9.
Even in the above case, as in the case of FIG. 6, the user is able to obtain the coupon for his or her desired commodity. According to this method of obtaining the coupon with the use of the IC card 50 also, the coupon distribution key data CD always exists as electronic data, and is never visible to the user. This contributes to preventing a third party, who is different from the authorized possessor and who has obtained the coupon in an improper manner, from using the coupon.
Note that in the above-described embodiment, the IC card 50 is adopted as an example of a portable memory that is carried by the user, but that the memory adopted in the present invention may be a portable electronic device, such as a cellular phone, that has a function as the IC card 50, or an IC card designed for contact-type communication.

## Claims

1. A data processing system, comprising:
display means for displaying advertising data;
key generation means for generating coupon distribution key data to be issued when a coupon published in said advertising data is distributed;
first communication means for reading memory identification data stored in a memory, and writing the coupon distribution key data generated by said key generation means to the memory from which said memory identification data has been read, said first communication means being integrated with said display means or placed close to said display means;
coupon management means for associating the coupon distribution key data generated by said key generation means with the memory identification data read by said first communication means and managing them;
an electronic commerce site where a commodity advertised with said advertising data is available for purchase;
a user terminal capable of accessing said electronic commerce site; and
second communication means for reading said memory identification data and said coupon distribution key data stored in said memory, said second communication means being connected to said user terminal, wherein,
when the user terminal has accessed said electronic commerce site and been operated to purchase the commodity, said user terminal transmits the memory identification data and the coupon distribution key data read by said second communication means to said coupon management means, and
said coupon management means compares said memory identification data and said coupon distribution key data managed therein with the memory identification data and the coupon distribution key data transmitted from said user terminal, and, if they coincide with each other, transmits said coupon possession data to said electronic commerce site to allow said electronic commerce site to perform a payment process while allowing the coupon to be reflected therein.

2. The data processing system according to claim 1, wherein said first communication means and/or said second communication means is contactless communication means.

3. The data processing system according to claim 1, wherein,
said key generation means is placed on the part of said coupon management means, and generates said coupon distribution key data upon receipt of the memory identification data via said first communication means, and
said coupon management means associates the generated coupon distribution key data with said memory identification data and manages them, and writes the coupon distribution key data to said memory via said first communication means.

4. The data processing system according to claim 1, wherein,
said key generation means is placed on the part of said display means,
said key generation means of said display means writes the generated coupon distribution key data to the memory via said first communication means, and
said coupon distribution key data and said memory identification data are stored in said coupon management means so as to be associated with each other.

5. The data processing system according to claim 1, wherein,
when a second or subsequent coupon is to be obtained, said first communication means reads, from said memory, said memory identification data and said coupon distribution key data previously stored therein, and transmits them to said coupon management means, and
said coupon management means compares said memory identification data and said coupon distribution key data managed therein with said memory identification data and said coupon distribution key data transmitted from said first communication means, and, if they coincide with each other, replaces said coupon distribution key data with a new piece of coupon distribution key data generated by said key generation means, and replaces said coupon distribution key data stored in said memory therewith via said first communication means.

6. A data processing method, comprising the steps of:
displaying advertising data on display means;
generating coupon distribution key data with key generation means, when distributing a coupon published in said advertising data;
with first communication means, reading memory identification data stored in a memory, and writing the coupon distribution key data generated by said key generation means to said memory from which the memory identification data has been read;
associating the memory identification data read by said first communication means with the coupon distribution key data generated by said key generation means and managing them in coupon management means;
reading said memory identification data and said coupon distribution key data stored in said memory, with second communication means connected to said user terminal capable of accessing an electronic commerce site;
with said user terminal, transmitting the memory identification data and the coupon distribution key data read by said second communication means to said coupon management means, when the user terminal accessing said electronic commerce site has been operated to purchase a commodity;
with said coupon management means, comparing said memory identification data and said coupon distribution key data managed therein with the memory identification data and the coupon distribution key data transmitted from said user terminal; and
if said memory identification data and said coupon distribution key data managed therein coincide with the memory identification data and the coupon distribution key data transmitted from said user terminal, transmitting said coupon possession data to said electronic commerce site to allow said electronic commerce site to perform a payment process while allowing the coupon to be reflected therein.

7. The data processing method according to claim 6, wherein said first communication means and/or said second communication means is contactless communication means.

8. The data processing method according to claim 6, wherein,
said key generation means is placed on the part of said coupon management means, and generates said coupon distribution key data upon receipt of the memory identification data via said first communication means, and
said coupon management means associates the generated coupon distribution key data with said memory identification data and manages them, and writes the coupon distribution key data to said memory via said first communication means.

9. The data processing method according to claim 6, wherein,
said key generation means is placed on the part of said display means, and the key generation means of said display means generates said coupon distribution key data,
the key generation means of said display means writes the generated coupon distribution key data to said memory via said first communication means, and
said coupon distribution key data and said memory identification data are stored in said coupon management means so as to be associated with each other.

10. The data processing method according to claim 6, further comprising the steps of:
when a second or subsequent coupon is to be obtained, reading, from said memory, said memory identification data and said coupon distribution key data previously stored therein via said first communication means, and transmitting them to said coupon management means, and
said coupon management means comparing said memory identification data and said coupon distribution key data managed therein with said memory identification data and said coupon distribution key data transmitted from said first communication means, and, if they coincide with each other, replacing the coupon distribution key data with a new piece of coupon distribution key data generated by said key generation means, and replacing said coupon distribution key data stored in said memory therewith via said first communication means.
